(19) 
**Europäisches Patentamt**
**European Patent Office**
**Office européen des brevets**

(11) **EP 3 239 994 A1**

(12) # EUROPEAN PATENT APPLICATION

(43) Date of publication:
**01.11.2017 Bulletin 2017/44**

(51) Int Cl.:
***H01F 1/055*** (2006.01)

(21) Application number: **17157588.9**

(22) Date of filing: **23.02.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **17.03.2016 PCT/JP2016/001538**

(71) Applicant: **Kabushiki Kaisha Toshiba Tokyo 105-8001 (JP)**

(72) Inventors:
• **Horiuchi, Yosuke**
  **Tokyo, 105-8001 (JP)**
• **Sakurada, Shinya**
  **Tokyo, 105-8001 (JP)**
• **Kinouchi, Hiroaki**
  **Tokyo, 105-8001 (JP)**

(74) Representative: **Hoffmann Eitle Patent- und Rechtsanwälte PartmbB Arabellastraße 30 81925 München (DE)**

(54) **PERMANENT MAGNET, ROTARY ELECTRICAL MACHINE, AND VEHICLE**

(57)    A permanent magnet expressed by a composition formula: $R_pFe_qM_rCu_tCo_{100-p-q-r-t}$. The magnet comprises: a metal structure including a main phase having a $Th_2Zn_{17}$ crystal phase and a grain boundary phase. The main phase includes a cell phase having the $Th_2Zn_{17}$ crystal phase, a Cu-rich phase having a Cu concentration higher than the cell phase, and a plurality of M-rich platelet phases extending in a direction intersecting with a c-axis of the $Th_2Zn_{17}$ crystal phase in a section including the c-axis and having a M element concentration higher than the cell phase. In the section, the cell phase has a 200 nm diameter or more, and a gap between the M-rich platelet phases is 80 nm or less.

**EP 3 239 994 A1**

**Description**

FIELD

Arrangements described herein generally relate to a permanent magnet, a rotary electrical machine, and a vehicle.

BACKGROUND

In a vehicle such as an automobile and a railway vehicle, it has been known to use a rotary electrical machine such as a motor and a power generator including an Nd-Fe-B based magnet to increase efficiency. The Nd-Fe-B based magnet has a high magnetic flux density. It is therefore possible to obtain high torque by using the Nd-Fe-B based magnet for the rotary electrical machine.

In the motor used for the vehicle such as the automobile and the railway vehicle, variable speed driving from a low-speed rotation to a high-speed rotation is performed. At this time, in the motor including a conventional Nd-Fe-B based sintered magnet, high torque can be obtained on the low-speed rotation side, but an induced voltage (back electromotive force) is generated on the high-speed rotation side resulting in a decrease in output.

In a permanent magnet such as the Nd-Fe-B based sintered magnet, an interlinkage magnetic flux is always generated with constant strength. At this time, an induced voltage due to the permanent magnet increases in proportion to a rotation speed. Accordingly, a voltage of the rotary electrical machine reaches an upper limit of a power supply voltage at the time of the high-speed rotation, resulting in that a current necessary for output does not flow. As a result, the output drastically decreases, and further the driving in a range of the high-speed rotation becomes impossible.

As a method of suppressing the effect of the induced voltage in the high-speed rotation, for example, there can be cited a field weakening control method. The field weakening control method is a method of lowering the magnetic flux density by generating an opposing magnetic field to lower the number of interlinkage magnetic fluxes. However, in the permanent magnet having the high magnetic flux density such as the Nd-Fe-B based sintered magnet, it is impossible to sufficiently lower the magnetic flux density at the time of the high-speed rotation.

RELEVANT REFERENCES

Patent Reference

Reference 1: JPA 2012-175738

Non-patent Reference

Reference 2: IEEJ Transactions Industry Applications, 2013, Vol. 133, NO. 9, pp. 943-951

BRIEF DESCRIPTION OF THE DRAWINGS

Fig. 1 is a view illustrating a magnetic property example of a permanent magnet of an arrangement.
Fig. 2 is a view illustrating a magnetic property example of a permanent magnet of a comparative example.
Fig. 3 is a section schematic view illustrating a configuration example of a permanent magnet;
Fig.4 is a view illustrating one example of a bright-field image by a STEM observation.
Fig. 5 is a view illustrating a state of a line analysis of a copper concentration to measure an average gap of a copper-rich phase from a TEM image.
Fig. 6 is a view illustrating an example of a line analysis result of the copper concentration illustrated in Fig. 5.
Fig. 7 is a view emphasizing a concentration difference in the line analysis result of the copper concentration illustrated in Fig. 6.
Fig. 8 is a view illustrating a motor.
Fig. 9 is a view illustrating a power generator.
Fig. 10 is a schematic view illustrating a configuration example of a vehicle.
Fig. 11 is a schematic view illustrating a configuration example of a vehicle.

DETAILED DESCRIPTION

A permanent magnet expressed by a composition formula: $R_pFe_qM_rCu_tCo_{100-p-q-r-t}$. R represents at least one element selected from the group consisting of rare earth elements, M represents at least one element selected from the group consisting of Zr, Ti, and Hf, p represents a number satisfying $10.5 \leq p \leq 12.4$ atomic percent, q represents a number satisfying $26 \leq q \leq 40$ atomic percent, r represents a number satisfying $0.88 \leq r \leq 4.3$ atomic percent, and t represents a number satisfying $3.5 \leq t \leq 13.5$ atomic percent. The magnet comprises: a metal structure including a main phase having a $Th_2Zn_{17}$ crystal phase and a grain boundary phase provided between crystal grains of the main phase. The main phase includes a cell phase having the $Th_2Zn_{17}$ crystal phase, a Cu-rich phase having a Cu concentration higher than the cell phase, and a plurality of M-rich platelet phases extending in a direction intersecting with a c-axis of the $Th_2Zn_{17}$ crystal phase in a section including the c-axis and having a M element concentration higher than the cell phase. In the section, the cell phase has a 200 nm diameter or more, and a gap between the M-rich platelet phases is 80 nm or less.

Hereinafter, arrangements are described with reference to the drawings. Note that the drawings are schematic, and for example, a relation between a thickness and a planar dimension, a ratio of thicknesses of respective layers, and the like may be different from actual ones. Moreover, in the arrangements, the same reference numerals are given to substantially the same components, and explanations thereof are not given.

(First Arrangement)

In the present arrangement, there is described an example of a permanent magnet applicable for a rotary electrical machine performing variable speed driving from low-speed to high-speed.

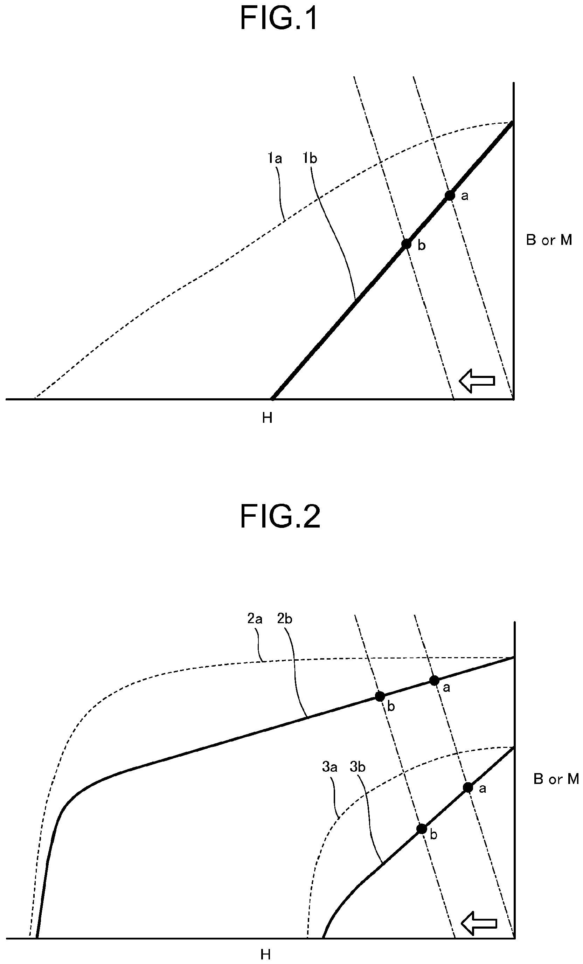

Fig. 1 is a view illustrating a magnetic property example of a permanent magnet of the arrangement, and Fig. 2 is a view illustrating a magnetic property example of a permanent magnet of a comparative example. Incidentally, in each of Fig. 1 and Fig. 2, a horizontal axis indicates a magnetic field H and a vertical axis indicates a magnetic flux density B or magnetization M.

A curve 1a illustrated in Fig. 1 indicates an M-H curve of the permanent magnet of the arrangement, and a curve 1b indicates a B-H curve of the permanent magnet of the arrangement. The permanent magnet of the arrangement has high magnetization on the B-H curve. Further, when an opposing magnetic field is applied by a field weakening control method, a magnetization decreased range when changing from an operating point a to an operating point b on the B-H curve is large. Namely, in the permanent magnet of the arrangement, recoil magnetic permeability on the B-H curve is high.

The recoil magnetic permeability is defined as follows. A sintered magnet is magnetized by a magnetizing apparatus and a pulsed magnetic field. A magnetization measurement is performed for this magnet to obtain the B-H curve. A linear fit is performed for this B-H curve to thereby find a slope. A value obtained by dividing this slope by vacuum permeability $1.26 \times 10^{-6}$ is set as the recoil magnetic permeability.

Further, the permanent magnet of the arrangement has a property in which a knickpoint does not occur on the B-H curve. The knickpoint is a transition point at which the slope changes at the time when the magnetic flux density is lowered by an external magnetic field and the magnetic flux density rapidly decreases.

A curve 2a illustrated in Fig. 2 indicates the M-H curve of a neodymium sintered magnet, and a curve 2b indicates the B-H curve of the neodymium sintered magnet. In case of the neodymium sintered magnet, the magnetization decreased range when changing from an operating point a to an operating point b is smaller than that of the permanent magnet of the arrangement as illustrated in Fig. 2. Namely, the neodymium sintered magnet has difficulty in lowering the magnetic flux density even with the use of the field weakening control method. In the field weakening, a magnet magnetic flux is canceled by a magnetic flux by a field weakening current. However, the magnetic flux by the field weakening current and the magnet magnetic flux are different from each other in a spatial waveform. Accordingly, even though a magnetic flux of a spatial fundamental wave component can be canceled, a spatial harmonic component is not canceled and is increased under certain circumstances.

The spatial harmonic component causes a core loss and a magnet eddy current loss at the time of high-speed rotation. Further, a magnet temperature increases due to the magnet eddy current loss to make thermal demagnetization easy to occur. In particular, in an embedded magnet type, a magnet magnetic flux approximates a rectangular wave and contains a lot of spatial harmonics. Further, a spatial harmonic of a slot ripple component is large caused by a short gap length, to thus cause a significant problem. A low-order spatial harmonic which is not canceled and remains is modulated by a slot ripple to be a high-order spatial harmonic, which is thought as one reason.

As a method of lowering the magnetic flux density, it is conceivable, for example,to use a bond magnet. Fig. 2 is a view where a curve 3a indicates an M-H curve of a neodymium bond magnet and a curve 3b indicates a B-H curve of the neodymium bond magnet. The neodymium bond magnet has a large magnetization decreased range when changing from an operating point a to an operating point b compared to the neodymium sintered magnet as illustrated in Fig. 2, namely has high recoil magnetic permeability. However, residual magnetization is low and coercive force Hcj is small, so that when the rotary electrical machine including the magnet performs variable speed driving from low-speed to high-speed, it becomes difficult to obtain high torque at the time of low-speed rotation.

For example, there can be cited an Al-Ni-Co based magnet in an incomplete magnetizing state in addition to the neodymium bond magnet, as a magnet having high recoil magnetic permeability However, the Al-Ni-Co based magnet in the incomplete magnetizing state also has low residual magnetization as same as the neodymium bond magnet, to therefore have difficulty in obtaining high torque at the time of low-speed rotation. Further, a neodymium magnet and a samarium magnet have high magnetization to make it possible to obtain high torque, but the recoil magnetic permeability of these magnets is generally 1 or so, resulting in that it is difficult to obtain a property with large recoil magnetic permeability.

On the other hand, in the permanent magnet of the arrangement, the residual magnetization is 1.16 T or more, the coercive force Hcj on the M-H curve is 1000 kA/m or more, and the recoil magnetic permeability is 1.15 or more. The residual magnetization is more preferably 1.2 T or more. The coercive force Hcj is more preferably 1200 kA/m or more. The recoil magnetic permeability is more preferably 1.2 or more. As above, the permanent magnet of the arrangement has the high recoil magnetic permeability in addition to the high magnetization and the high coercive force. Accordingly, it is possible to suppress the decrease in output in the rotary electrical machine performing the variable speed driving from low-speed to high-speed.

In the above-described rotary electrical machine, a rotor is provided while disposing a plurality of magnetic poles inside an iron core of the rotor. Besides, stators are disposed around an outer periphery of the rotor through an air gap. Further, an armature winding is provided at the stator. A flux quantum of permanent magnets forming the magnetic poles in the rotor can be reversibly changed by a magnetic field made by the above-described armature winding. However, two types or more of magnets are required, to thereby cause a complicated structure, and further to cause a problem that the number of manufacturing processes also increases.

On the other hand, in the permanent magnet of the arrangement, a single magnet has both properties of the high magnetization and the high recoil magnetic permeability, to thus make it possible to simplify the structure of the rotary electrical machine and to suppress an increase in the number of manufacturing processes.

Since the above-described permanent magnet contains a low coercive force component, the recoil magnetic permeability is high. Further, coercive force Hcb on the B-H curve is 800 kA/m or less. However, since a high coercive force component is also contained, the knickpoint on the B-H curve does not occur even on a high magnetic field side where it is greater than 1000 kA/m and demagnetization is difficult to occur as illustrated in FIG. 1. In order to prevent the knickpoint from occurring on the B-H curve, the coercive force Hcj on the M-H curve is preferably 1000 kA /m or more. Furthermore, in the permanent magnet of the arrangement, a ratio of a magnetic field Hk90 when magnetization is 90% of the residual magnetization relative to the coercive force Hcj is 70 or less. As above, the permanent magnet of the arrangement has a good squareness ratio.

Next, there is described a structural example of the permanent magnet of the arrangement having the above-described properties. The permanent magnet of the arrangement includes a sintered compact including a composition expressed by a composition formula: $R_pFe_qM_rCu_tCo_{100-p-q-r-t}$ (where R is at least one element selected from rare-earth elements, M is at least one element selected from a group made up of Zr, Ti, and Hf, p is a number satisfying $10.5 \leq p \leq 12.4$ atomic%, q is a number satisfying $26 \leq q \leq 40$ atomic%, r is a number satisfying $0.88 \leq r \leq 3.5$ atomic%, and t is a number satisfying $3.5 \leq t \leq 13.5$ atomic%).

R in the above-described composition formula is an element capable of giving a magnetic material large magnetic anisotropy. As the element R, there can be used, for example, one or a plurality of elements or the like selected from rare-earth elements including yttrium (Y), and for example, there can be used samarium (Sm), cerium (Ce), neodymium (Nd), praseodymium (Pr), and so on, and particularly Sm is preferably used. For example, when the plurality of elements including Sm are used as the element R, it is possible to increase performance of the magnetic material, for example, the coercive force by setting an Sm concentration to be 50 atomic percent or more with respect to all of the elements usable as the element R. Incidentally, Sm is more preferably 70 atomic percent or more and further preferably 90 atomic percent or more with respect to the elements usable as the element R.

When the concentration of the elements usable as the element R is set to, for example, 10.5 atomic percent or more and 12.4 atomic percent or less, the coercive force can be increased. When the concentration of the elements usable as the element R is less than 10.5 atomic percent, a large amount of $\alpha$-Fe precipitates to thereby lower the coercive force, and when the concentration of the elements usable as the element R exceeds 12.4 atomic percent, saturation magnetization deteriorates. The concentration of the elements usable as the element R is more preferably 10.9 atomic percent or more and 12.1 atomic percent or less, and further preferably 11.0 atomic percent or more and 12.0 atomic percent or less.

M in the above-described composition formula is an element capable of exerting large coercive force with the composition of high Fe concentration. As the element M, there can be used, for example, one or a plurality of elements selected from a group made up of titanium (Ti), zirconium (Zr), and hafnium (Hf). When a content r of the element M exceeds 4.3 atomic percent, a hetero-phase that excessively contains the element M is easy to be generated, resulting in that the coercive force and the magnetization both are easy to decrease. Further, when the content r of the element M is less than 0.88 atomic percent, an effect of increasing the Fe concentration is easy to be small. Namely, the content r of the element M is preferably 0.88 atomic percent or more and 3.5 atomic percent or less. The content r of the element M is more preferably 1.14 atomic percent or more and 3.4 atomic percent or less, and further preferably greater than 1.49 atomic percent and 2.24 atomic percent or less, and furthermore preferably 1.55 atomic percent or more and 2.23 atomic percent or less.

The element M preferably contains at least Zr. In particular, it is possible to increase the coercive force of the permanent magnet by setting Zr to be 50 atomic percent or more of the element M. On the other hand, Hf is especially expensive among the elements M, and therefore, even when Hf is used, a used amount of Hf is preferably small. For example, a content of Hf is preferably less than 20 atomic percent of the element M.

Cu is an element capable of exerting the high coercive force in the magnetic material. A content of Cu is preferably, for example, 3.5 atomic percent or more and 13.5 atomic percent or less. When the content of Cu greater than this is blended, the decrease in magnetization is significant, or when the content of Cu is smaller than this, it becomes difficult to obtain the high coercive force and the good squareness ratio. A content t of Cu is more preferably 3.9 atomic percent or more and 10.0 atomic percent or less, and further preferably 4.1 atomic percent or more and 5.8 atomic percent or less.

Fe is an element mainly responsible for the magnetization of the magnetic material. Blending a large amount of Fe can increase the saturation magnetization of the magnetic material, but when Fe is blended too much, it becomes difficult to obtain a desired crystal phase due to precipitation of $\alpha$-Fe and phase separation, to cause a risk that the coercive force decreases. Accordingly, a content q of Fe is preferably 26 atomic percent or more and 40 atomic percent or less. The content q of Fe is more preferably 27 atomic percent or more and 36 atomic percent or less, and further preferably 30 atomic percent or more and 33 atomic percent or less.

Co is an element responsible for the magnetization of the magnetic material and capable of exerting the high coercive force. Further, when a large amount of Co is blended, a high Curie temperature can be obtained and thermal stability of magnetic properties can be increased. A small blending amount of Co decreases these effects. However, when Co is added too much, a ratio of Fe relatively decreases, which may lead to a decrease in the magnetization. Further, it is possible to increase the magnetic properties, for example, the coercive force by substituting 20 atomic percent or less of Co with one or a plurality of elements selected from a group made up of of Ni, V, Cr, Mn, Al, Si, Ga, Nb, Ta, and W.

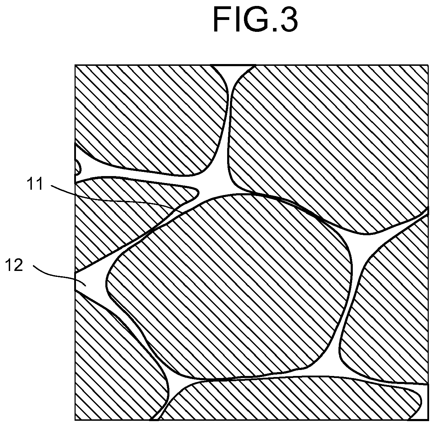

Fig. 3 is a section schematic view illustrating a configuration example of a permanent magnet of this arrangement. Fig. 3 illustrates a part of a cross section of the permanent magnet. The permanent magnet of the arrangement includes a two-dimensional metallic structure containing a crystal grain 11 having a $Th_2Zn_{17}$ crystal phase (2-17 crystal phase) of a hexagonal system and a grain boundary phase 12 provided between the crystal grains 11. The crystal grain 11 constitutes a main phase (phase whose volume occupancy ratio is the highest among respective crystal grain phases and amorphous phases in the permanent magnet) of the permanent magnet.

The metal structure contains a cell phase having the 2-17 crystal phase, a Cu-rich phase having a $CaCu_5$ crystal phase (1-5 crystal phase) of the hexagonal system, and an M-rich platelet phase. The Fe concentration of the cell phase is preferably, for example, 26 atomic% or more.

The Cu-rich phase is preferably formed to surround the cell phase. The above structure is also called to as a cell structure. Further, the Cu-rich phase also contains a cell wall phase that separates the cell phase. A c-axis of the $Th_2Zn_{17}$ crystal phase preferably exists in parallel to an easy magnetization axis. Note that the parallel may include a state within $\pm$ 10 degrees from a parallel direction (substantially parallel).

The Cu-rich phase is a phase containing Cu with higher concentration than that of the $Th_2Zn_{17}$ crystal phase. A Cu concentration of the Cu-rich phase is preferably, for example, 1.5 times or more and 15 times or less of the Cu concentration of the $Th_2Zn_{17}$ crystal phase. The Cu-rich phase exists in a linear shape or a plate shape in, for example, a cross-section including the c-axis at the $Th_2Zn_{17}$ crystal phase. A structure of the Cu-rich phase is not particularly limited, but for example, there can be cited the $CaCu_5$ crystal phase (1-5 crystal phase) of the hexagonal system, or the like. Further, the permanent magnet may also have a plurality of Cu-rich phases with different phases.

A magnetic domain wall energy of the Cu-rich phase is higher than the magnetic domain wall energy of the $Th_2Zn_{17}$ crystal phase, and this difference in the magnetic domain wall energies becomes a barrier to magnetic domain wall displacement. Namely, it is possible to suppress the magnetic domain wall displacement between a plurality of cell phases by the Cu-rich phase functioning as a pinning site. In particular, the effect of suppressing the magnetic domain wall displacement is increased by forming the cell structure. This is also called a magnetic domain wall pinning effect. Accordingly, the Cu-rich phase is more preferably formed to surround the cell phase. The permanent magnet having such a structure is also called a pinning-type permanent magnet.

In an Sm-Co based magnet containing Fe of 26 atomic% or more, the Cu concentration of the Cu-rich phase is preferably 35 atomic% or more and 60 atomic% or less. It is possible to increase the coercive force and the squareness ratio by increasing the Cu concentration of the Cu-rich phase. In a region with high Fe concentration, variation is easy to occur in the Cu concentration of the Cu-rich phase and, for example, the Cu-rich phase having the large magnetic domain wall pinning effect and the Cu-rich phase having the small magnetic domain wall pinning effect are generated, and the coercive force and the squareness ratio decrease.

When a magnetic domain wall deviating from the pinning site is displaced, the magnetization is reversed by the displaced amount, and thus the magnetization decreases. If the magnetic domain wall deviates from the pinning site all at once by a certain magnetic field when an external magnetic field is applied, the magnetization becomes difficult to decrease by application of the magnetic field, and the good squareness ratio can be obtained. In other words, if the magnetic domain wall deviates from the pinning site by a magnetic field lower than the coercive force and the magnetic domain wall is displaced when a magnetic field is applied, it is conceivable that the magnetization decreases by the displaced amount, leading to deterioration of the squareness ratio.

The M-rich platelet phase is a phase with a higher concentration of the element M such as Zr than the $Th_2Zn_{17}$ crystal phase and, for example, extends in a direction perpendicularly crossing the c-axis of the $Th_2Zn_{17}$ crystal phase. For example, when a Zr concentration of the platelet phase is higher than that of the $Th_2Zn_{17}$ crystal phase, the platelet phase is also called a Zr-rich platelet phase.

An element M concentration of the M-rich platelet phase is preferably 1.2 times or more and 5 times or less of the element M concentration of the $Th_2Zn_{17}$ crystal phase. The element M concentration of the M-rich platelet phase is preferably, for example, 6 atomic% or more and 20 atomic% or less.

As described above, the permanent magnet of the arrangement has a composition containing at least the rare-earth elements. The above-described magnet has a high Curie point, and therefore, good rotary electrical machine properties at high temperature can be enabled. Further, the neodymium magnet is a nucleation-type permanent magnet, while the above-described magnet is the pinning-type permanent magnet. When a reverse axis is generated in the neodymium magnet, the magnetic domain wall is reversed all at once. On the other hand, in the permanent magnet of the arrangement, the magnetic domain wall displacement is suppressed by the Cu-rich phase and the magnetic domain wall deviates from the pinning site, and thereby the magnetic domain wall displacement (magnetization reversal) advances. In other words, it is possible to suppress the magnetic domain wall displacement by a size of the cell structure formed by the $Th_2Zn_{17}$ crystal phase, the Cu-rich phase, and the M-rich platelet phase and the composition of each phase.

The cell structure becomes dense when the concentration of the element R is high, and becomes coarse when the concentration is low. Further, a comparison between sintered compacts having the same composition is made to find out that in a sample with the dense cell structure, a volume fraction of the cell wall phase increases, and in a sample with the coarse structure, the volume fraction decreases. Further, a comparison between the Cu concentrations in the cell wall phase is made to find out that the Cu concentration becomes lower as the cell structure is denser.

The Cu-rich phase affects on pinning force of the magnetic domain wall, and when the Cu concentration is low, the pinning force is weak, resulting in that the coercive force decreases. On the other hand, when the cell structure is coarse and the Cu concentration in the Cu-rich phase is high, each pinning force in the Cu-rich phase is high, resulting in that the coercive force increases. As long as two types or more different properties can be enabled in a single sintered compact, a single magnet obtains a place where the magnetic domain wall is easily displaced (magnetization is easily reversed) and a place where the magnetization reversal does not easily occur existing therein, thereby making it possible to create a distribution of the coercive force. As a result, the slope of the magnetization curve becomes steep and the recoil magnetic permeability increases. Further, the knickpoint exists on the high magnetic field side because the coercive force is large, and irreversible demagnetization does not occur even when a large magnetic field is applied.

The composition of the permanent magnet is measured by, for example, an ICP (inductively coupled plasma) emission spectrochemical analysis method, an SEM-EDX (SEM-energy dispersive X-ray spectroscopy), a TEM-EDX (transmission electron microscope-EDX), and the like. The volume ratios of the respective phases are comprehensively determined based on observations with an electron microscope and an optical microscope as well as X-ray diffraction and the like, but can be found by an areal analysis method that uses an electron micrograph of a cross section of the permanent magnet. A cross section at a substantially center part of a surface with a maximum area of the sample is used as the cross section of the permanent magnet.

The metallic structures such as the $Th_2Zn_{17}$ crystal phase, the Cu-rich phase and the M-rich platelet phase are identified, for example, in the following manner. First, a sample is observed by a STEM. At this time, the sample is observed by a SEM to thereby specify a location of the grain boundary phase, and the sample is processed by using a focused ion beam (FIB) so as to bring the grain boundary phase into view, and thereby observation efficiency can be increased. The above-described sample is a sample obtained after an aging treatment. On this occasion, the sample is preferably a product that is not yet magnetized. Observation conditions are set to be, for example, an acceleration voltage of 200 kV, and a measurement area of 30 $\mu$m $\times$ 30 $\mu$m.

Next, the concentrations of the respective elements in the sample are measured by using, for example, a STEM-energy dispersive X-ray spectroscopy (STEM-EDX) where the STEM is utilized.

When the concentrations of the respective elements are measured by the STEM-EDX, a sample for measurement is cut out from an inside positioning at 1 mm or more apart from the surface of the sample. Further, an observation is performed at 100k magnification to a plane that is parallel to the easy magnetization axis (c-axis). Next, a mapping of each element in the same view is performed, each phase is specified, and the concentration of each element in the phase is measured.

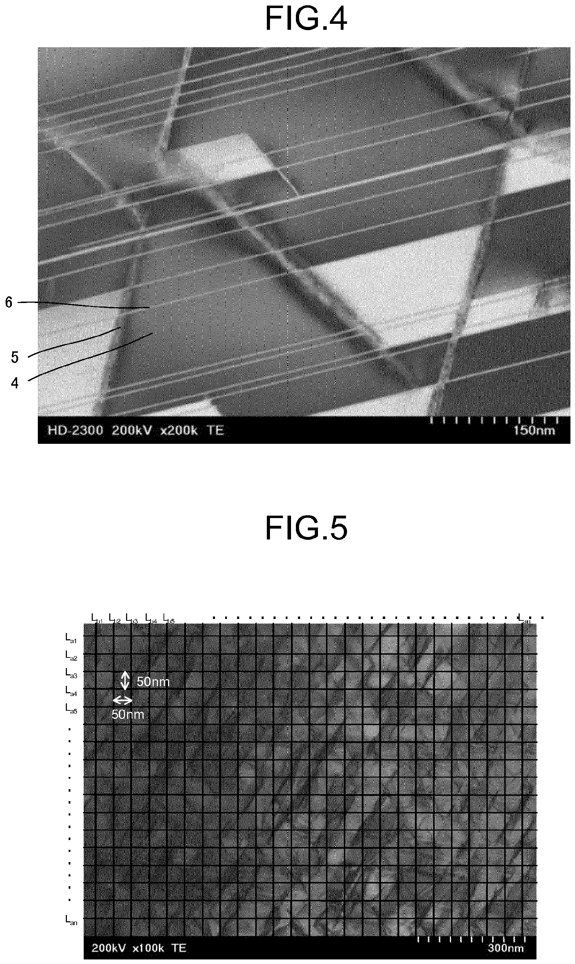

Fig. 4 is a view illustrating a bright-field image obtained by the STEM observation of the permanent magnet of the arrangement. The bright-field image illustrated in Fig. 4 includes a cell phase 4, a Cu-rich phase 5, and M-rich platelet phases 6. In Fig. 4, the M-rich platelet phase 6 crosses the Cu-rich phase 5, but it is not limited thereto. Besides, in Fig. 4, a plurality of M-rich platelet phases 6 exist in parallel or in substantially parallel with each other.

In the Sm-Co based permanent magnet, it is important to control the cell structure to obtain values of the residual magnetization, the coercive force, the recoil magnetic permeability, and so on. For example, when a diameter of the cell phase becomes large, a gap between the Cu-rich phases becomes large, and the magnetization reversal is easy to occur. Besides, in the Sm-Co based magnet with high Fe concentration, the recoil magnetic permeability becomes high, though the coercive force or the like is easy to decrease.

The diameter of the cell phase is easy to be small if the M-rich platelet phase exists. On the other hand, the M-rich platelet phase also functions as the magnetic domain wall pinning site, and therefore, it preferably exists in the metallic structure.

In the permanent magnet of the arrangement, the diameter of the cell phase in the cross section including the c-axis of the $Th_2Zn_{17}$ crystal phase is 200 nm or more, and the gap between the plurality of M-rich platelet phases is 80 nm or less.

When the diameter of the cell phase is less than 200 nm, the magnetization reversal is difficult to occur, but the recoil magnetic permeability decreases. When the gap between the M-rich platelet phases is over 80 nm, the cell structure is difficult to be obtained. The diameter of the cell phase and the gap between the M-rich platelet phases are controlled to be in the above-stated ranges, and thereby, the properties such as the residual magnetization, the coercive force, the recoil magnetization permeability can be increased.

The diameter of the cell phase can be found as, for example, described below. In the arrangement, an average gap d between the Cu-rich phases is regarded as the diameter of the cell phase. Accordingly, a concrete example of how to find the average gap d between the Cu-rich phases is described below.

(1) Cross Section Observation Step

At first, the cross section including the c-axis of the 2-17 crystal phase of the permanent magnet (a magnetic field oriented sintered compact after aging treatment) is observed by the TEM. At the obtained cross section, a part with a uniform contrast is the 2-17 crystal phase (cell phase), and a plate shaped part existing therebetween is the Cu-rich phase.

(2) Composition Line Analysis Step

Next, a composition line analysis of a TEM image being the cross section observation result of the permanent magnet is performed. A state of the composition line analysis of the TEM image is illustrated in Fig. 5. Fig. 5 illustrates the TEM image which is different from a structure according to the arrangement, but it is illustrated as a matter of convenience to describe the following composition line analysis step, and it is not to limit the present disclosure. First, line analyses (La1 to Lan) are performed at even intervals in a first direction of the TEM image. The line analyses are performed in parallel at even intervals. The interval of the line analyses is set to be 30 to 50 nm. Next, the line analyses (Lb1 to Lbn) are performed in the same TEM image in a second direction which is perpendicular to the first direction at even intervals. The line analyses in this case are also performed in parallel at even intervals of 30 to 50 nm. In Fig. 5, the intervals of the line analyses (parallel lines) is set to be 50 nm.

(3) Position Identification Step of Cu-rich Phase

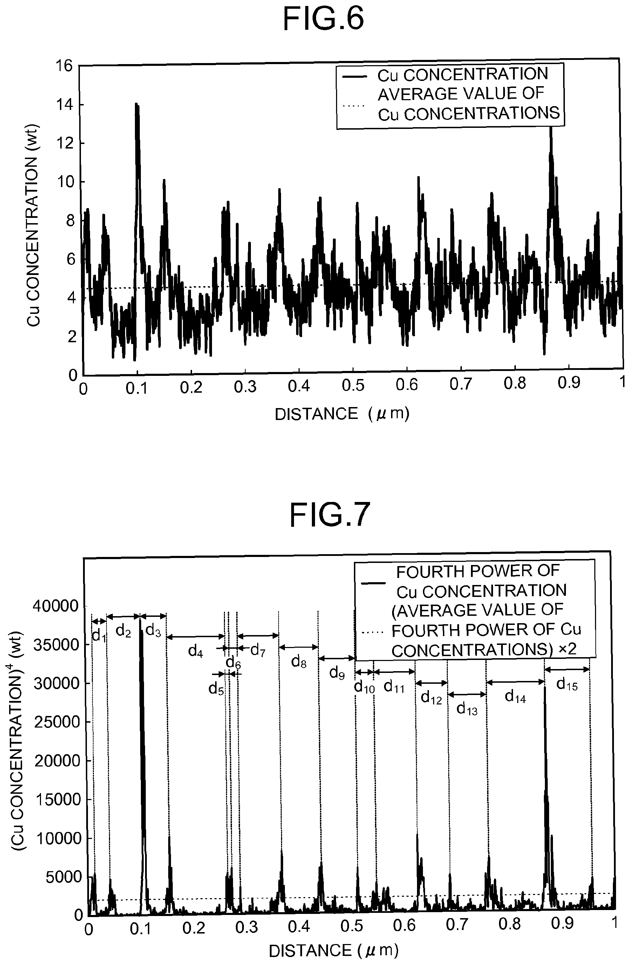

Next, the Cu concentration is found from respective line analysis results (La1 to Lan and Lb1 to Lbn) of the TEM image. A measurement result of the Cu concentration by the line analysis La4 is illustrated in Fig. 6. Further, the Cu concentration obtained by the line analysis is raised to the second power to the 16th power so as to definitize a difference in the Cu concentrations, the values are made into a graph to find an average value. Fig. 7 illustrates a graphic chart in which data where the Cu concentrations in Fig. 6 are raised to the fourth power are plotted. In the drawing, a solid line is a data value of the Cu concentration (a fourth power value) at each point, and a dotted line is a value where the average value is doubled. In Fig. 7, a region where a width of a part in which the data value of the Cu concentration (the fourth power value of the Cu concentration) is continuously larger than the double value of the average value is 2 nm or more is regarded as the Cu-rich phase, and a position where the data value of the Cu concentration is the maximum in the region is regarded as a center position of the Cu-rich phase.

(4) Measurement Step of Average gap of Cu-rich Phases

A distance between the center positions of the Cu-rich phases identified in the step 3 (a distance between peaks each of where the Cu concentration shows a maximum value/ d1, d2 ... dn in Fig. 7) is measured while regarding the distance as a distance between the Cu-rich phases. A distance da1 between the Cu-rich phases in one time composition line analysis is found as an average value of the respective distances between peaks d1, d2 ... dn. The measurement of the distance between phases as stated above is performed for all of the line analysis results to find an average value of the distance between phases (da1 to dan and db1 to dbn) of the respective lines analysis results. The average value of the distances between phases [(dal + da2 ... + dan + db1 + db2 ... + dbn)/ 2n] is defined as an average distance d between the Cu-rich phases (an average gap between the Cu-rich phases).
The average distance d between the Cu-rich phases (the average gap between the Cu-rich phases) is regarded as the diameter of the cell phase.
An average gap between the M-rich platelet phases can be found by the (1) cross section observation step, the (2) composition line analysis step, (3) position identification step of M-rich platelet phase, (4) measurement step of average gap of M-rich platelet phases as same as the way of finding the average gap d of the Cu-rich phases. The (1) cross section observation step and the (2) composition line analysis step are the same as the way of finding the average gap d between the Cu-rich phases.
In the (3) position identification step of the M-rich platelet phase, the element M concentration is found from the respective line analysis results (La1 to Lan and Lb1 to Lbn) of the TEM image. Further, the element M concentration obtained by the line analysis is raised to the second power to the 16th power so as to definitize a difference in the element M concentrations, the values are made into a graph to find an average value. A region where a width of a part in which a data value of the element M (for example, the fourth power value of the M concentration) is continuously larger than a double value of the average value is 2 nm or more is regarded as the M-rich platelet phase, and a position where the data value of the element M concentration is the maximum in the region is regarded as a center position of the M-rich platelet phase.
In the (4) measurement step of the average gap of the M-rich platelet phases, a distance between the center positions of the M-rich platelet phases identified in the position identification step (a distance between peaks each of where the element M concentration shows a maximum value) is measured while regarding the distance as a distance between the M-rich platelet phases. A distance between the M-rich platelet phases in one time composition line analysis is found as an average value of the distances between peaks. The measurement of the distance between phases as stated above is performed for all of the line analysis results to find an average value of the distances between phases of the respective lines analysis results. The average value of the distances between phases is defined as an average distance between the M-rich platelet phases (an average gap of the M-rich platelet phases).
Note that for measurement of the concentration of the element of each phase, a 3-dimensional atom probe (3DAP) may also be used. An analysis method using the 3DAP is an analysis method where an observed sample is subjected to electric field evaporation by applying a voltage, and then ions evaporated by electric field are detected by a two-dimensional detector, to thereby identify an atomic arrangement. Ion species are identified by a flight time until reaching the two-dimensional detector, individually detected ions are continuously detected in a depth direction, and the ions are aligned in an order of detection (reconstructed), thereby obtaining a three-dimensional atomic distribution. As compared to the concentration measurement of the TEM-EDX, each element concentration in each crystal phase can be measured more accurately.
The measurement of the element concentration in each phase by the 3DAP is performed following the procedure described below. First, a sample is cut into a flake by dicing, from which a needle-shaped sample for a pickup atom probe (AP) is made by the FIB.
The measurement by the 3DAP is performed for an inside part of the sintered compact. The measurement of the inside part of the sintered compact is as follows. First, at a center part of a longest side on a surface having a largest area, a composition is measured at both a surface part and an inside part of a cross section taken perpendicular to the side (perpendicular to a tangential line of the center part when it is a curved line). As measurement positions, there are provided a first reference line drawn perpendicular to the side and inward to an end part from a position of 1/2 of each side in the above-described cross section as a starting point, and a second reference line drawn inward to an end part from a center of each corner as a starting point at a position of 1/2 of an internal angle of the corner, and each position at 1% of a length of the reference line from the starting point of each of these first reference line and second reference line is defined as the surface part, and each position at 40% is defined as the inside part. Note that when the corner has a curvature by chamfering or the like, an intersection point of extended adjacent sides is taken as the end part (center of the corner) of the side. In this case, the measurement position is a position not from the intersection point but from a part which is in contact with the reference line.

By setting the measurement positions as above, when the cross section is a quadrangle for example, there are four first reference lines and four second reference lines, eight reference lines in total, and there are eight measurement positions each at the surface part and the inside part. In this arrangement, it is preferable that all of the eight positions at each of the surface part and the inside part fall within the above-described composition range, but at least four or more positions in each of the surface part and the inside part may fall within the above-described composition range. In this case, a relation between the surface part and the inside part on one reference line is not defined. An observation surface inside the sintered compact defined in this manner is polished to be smooth, and thereafter the observation is performed. For example, the observation positions of the TEM-EDX in the concentration measurement are 20 arbitrary points in each phase, an average value of measurement values excluding a maximum value and a minimum value is found from measurement values at these points, and this average value is taken as the concentration of each element. The measurement of 3DAP also complies thereto.

In the measurement results of concentration in the Cu-rich phase by using the above-described 3DAP, a Cu concentration profile in the Cu-rich phase is preferably sharper. Specifically, a full width at half maximum (FWHM) of the Cu concentration profile is preferably 5 nm or less, and a higher coercive force can be obtained in this case. This is because when the distribution of Cu in the Cu-rich phase is sharp, the magnetic domain wall energy difference between the cell phase and the Cu-rich phase rapidly occurs, and the magnetic domain wall becomes easy to be pinned.

The full width at half maximum (FWHM) of the Cu concentration profile in the Cu-rich phase can be found as follows. A value where the Cu concentration is the highest (PCu) is found from the Cu profile of the 3DAP based on the above-described method, and a width of a peak where it is a half value of this value (PCu/2), that is, the full width at half maximum (FWHM) is found. The measurement as described above is performed for 10 peaks, and an average value of these values is defined as the full width at half maximum (FWHM) of the Cu profile. When the full width at half maximum (FWHM) of the Cu profile is 3 nm or less, the effect of increasing the coercive force further improves, and when it is 2 nm or less, a furthermore excellent improving effect of the coercive force can be obtained.

The squareness ratio is defined as follows. First, a direct current magnetization property at room temperature is measured by a direct current B-H tracer. Next, residual magnetization $M_r$, coercive force Hcj, and a maximum energy product (BH)max being basic properties of a magnet are found from the B-H curve obtained from measurement results. At this time, a logical maximum value (BH)max is found by the following expression (1) by using $M_r$.

$$(BH)\mathrm{max}\ (\mathrm{logical\ value}) = M_r^2/4\mu_0 \ \dots \ (1)$$

The squareness ratio is evaluated by a ratio between (BH)max obtained by measurement and (BH)max (logical value), and is found by the following expression (2).

$$(BH)\mathrm{max}\ (\mathrm{actual\ value})/(BH)\mathrm{max}\ (\mathrm{logical\ value}) \times 100 \ \dots \ (2)$$

Next, an example of a method of manufacturing the permanent magnet will be described. First, an alloy powder containing predetermined elements necessary for composing the permanent magnet is prepared. Next, the alloy powder is charged in a metal mold placed in an electromagnet, and is press-formed while applying a magnetic field, to thereby produce a green compact with an oriented crystal axis.

For example, the alloy powder can be prepared by pulverizing an alloy ingot obtained by casting a molten metal by an arc melting method or a high-frequency melting method. It is also possible for the alloy powder to have a desired composition by mixing a plurality of powders having different compositions. Further, the alloy powder may also be prepared by using a mechanical alloying method, a mechanical grinding method, a gas atomizing method, a reduction diffusion method, and so on. When producing an alloy thin strip using a strip cast method, a flaky alloy thin strip is produced, and thereafter the alloy thin strip is pulverized to prepare the alloy powder. For example, a thin strip continuously solidified to a thickness of 1 mm or less can be produced by tilt-pouring a molten alloy onto a chill roll rotating at a peripheral speed of 0.1 m/sec or more and 20 m/sec or less. When the peripheral speed is less than 0.1 m/sec, variation of composition is easy to occur in the thin strip. Further, when the peripheral speed exceeds 20 m/sec, magnetic properties may decrease by excessive refining of crystal grains, or the like. The peripheral speed of the chill roll is more preferably 0.3 m/sec or more and 15 m/sec or less, and is further preferably 0.5 m/sec or more and 12 m/sec or less.

Further, it is possible to homogenize this material by subjecting the above-described alloy powder or the alloy material before pulverization to a heat treatment. For example, the material can be pulverized by using a jet mill, a ball mill, and so on. Note that it is possible to prevent oxidation of the powder by pulverizing a material in an inert gas atmosphere or an organic solvent.

In the powder after pulverization, a degree of orientation becomes high and the coercive force becomes large when the average grain diameter is 2 μm or more and 5 μm or less and a ratio of powder with a grain diameter of 2 μm or more and 10 μm or less is 80% or more of the whole powder. In order to enable this, pulverization with the jet mill is preferred.

For example, when pulverization is performed with the ball mill, a large amount of fine powder with a grain diameter of sub-micron level is contained even if the average grain diameter of the powder is 2 μm or more and 5 μm or less. When this fine powder aggregates, it becomes difficult for the c-axis of crystal in a TbCu7 phase to align in the easy magnetization axis direction during the magnetic field orientation at a pressing time, and the orientation is easy to be poor. Further, there is a risk that such fine powder increases an amount of oxides in the sintered compact and decreases the coercive force. In particular, when the Fe concentration is 26 atomic percent or more, it is desired that the ratio of powder with the grain diameter of 10 (μm or more is 10% or less of the whole powder in the powder after pulverization. When the Fe concentration is 26 atomic percent or more, an amount of a hetero-phase in the ingot to be a raw material increases. In this hetero-phase, not only an amount of powder increases but also the grain diameter tends to increase, and the grain diameter can even become 20 μm or more.

When such an ingot is pulverized, for example, the powder with the grain diameter of 15 μm or more may become a hetero-phase powder as it is. When such a pulverized powder containing a coarse hetero-phase powder is pressed in a magnetic field to make a sintered compact, the hetero-phase remains to cause the decrease in the coercive force, the decrease in the magnetization, the decrease in the squareness, and the like. When the squareness decreases, magnetizing becomes difficult. In particular, magnetizing to a rotor or the like after assembly becomes difficult. The powder with the grain diameter of 10 μm or more is set to be 10% or less of the whole, and thereby, the coercive force can be increased while suppressing the decrease in the squareness ratio in the high Fe concentration composition containing 26 atomic percent or more of Fe.

Next, sintering is performed. In the sintering, the above-described green compact is retained at a temperature of 1180°C or more and 1220°C or less for 1 hour or more and 15 hours or less, to thereby perform a heat treatment. For example, when the retention temperature is less than 1180°C, the density of the produced sintered compact is easy to be low. Further, when it is higher than 1220°C, the magnetic properties may decrease due to excessive evaporation of the element R such as Sm in the powder, or the like. The more preferable retention temperature is 1190°C or more and 1210°C or less. On the other hand, when the retention time is less than 1 hour, the density easily becomes uneven, and thus the magnetization is easy to decrease, further the crystal grain diameter of the sintered compact becomes small and a grain boundary phase ratio becomes high, and thus the magnetization is easy to decrease. Further, when the retention time exceeds 15 hours, evaporation of the element R in the powder becomes excessive, to cause a risk that the magnetic properties decrease. The retention time is more preferably 2 hours or more and 13 hours or less, and further preferably 3 hours or more and 10 hours or less. Note that oxidation can be suppressed by performing the heat treatment in vacuum or in argon gas. Further, the sintered compact density can be improved by maintaining the vacuum until the temperature comes close to the retention temperature, for example, the temperature of 1100°C or more and 1200°C or less, and thereafter switching the atmosphere to the Ar atmosphere and isothermally retaining the sintered compact.

Next, a solution heat treatment is performed. The solution heat treatment is a treatment to form the TbCu7 crystal phase (1-7 crystal phase) to be a precursor of a phase separation structure. In the solution heat treatment, a heat treatment is performed by retaining at a temperature of 1090°C or more and less than 1130°C for 3 hours or more and 28 hours or less.

When the retention temperature during the solution heat treatment is less than 1090°C and 1130°C or more, a ratio of the $TbC_{U7}$ crystal phase existing in the sample after the solution heat treatment becomes small, to cause a risk that the magnetic properties decrease. The retention temperature is preferably 1100°C or more and 1120°C or less. Further, when the retention time during the solution heat treatment is less than 3 hours, a constituent phase is easy to be nonuniform, the coercive force is easy to decrease, the crystal grain diameter of the metallic structure is easy to be small, the grain boundary phase ratio is easy to increase, and the magnetization is easy to decrease. Further, when the retention temperature during the solution heat treatment exceeds 28 hours, there is a risk that the magnetic properties decrease due to evaporation or the like of the element R in the sintered compact. The retention time is preferably 4 hours or more and 24 hours or less, and further preferably 11 hours or more and 18 hours or less. Incidentally, oxidation of the powder can be suppressed by performing the solution heat treatment in the vacuum or in the inert atmosphere such as the argon gas.

Further, rapid cooling is performed after the isothermal retention. For example, the rapid cooling to room temperature is performed while setting a cooling rate at 170°C/min or more, and thereby, the TbCu7 crystal phase can be stabilized, and the coercive force is easy to be exerted. When the cooling rate is less than 170°C/min, a Ce2Ni7 crystal phase (2-7 crystal phase) is easy to be generated during the cooling. The magnetization may decrease due to existence of the 2-7 crystal phase, and the coercive force may also decrease. It is because there are often cases when Cu is thickened in the 2-7 crystal phase, to thereby decrease the Cu concentration in the main phase, and the phase separation due to the aging treatment is difficult to occur. In particular, the cooling rate tends to be important in the composition where the Fe concentration is 26 atomic% or more.

A quality improvement treatment may be performed between the sintering and the solution heat treatment. The quality improvement treatment is a treatment to control the metallic structure, in particular, a macrostructure. In the quality improvement treatment, a heat treatment is performed by, for example, retaining the sintered compact at a temperature 10°C or more lower than the heat treatment temperature during the sintering and a temperature 10°C or more higher than the heat treatment temperature during the solution heat treatment for 2 hours or more and 12 hours or less. When the heat treatment is not performed at the temperature 10°C or more lower than the heat treatment temperature during the sintering, it is impossible to sufficiently remove the hetero-phase derived from a liquid phase which is generated during the sintering. The orientation of the hetero-phase is often low, and when the hetero-phase exists, a crystal orientation of the crystal grains is easy to deviate from the easy magnetization axis, resulting in that not only the squareness ratio decreases but also the magnetization is easy to decrease. Further, in the solution heat treatment, the temperature is low, and it is difficult to sufficiently remove the hetero-phase generated during the sintering from a viewpoint of an element diffusion speed. Further, a grain growth speed is also slow, to therefore create a possibility that a sufficient crystal grain diameter cannot be obtained, resulting in that improvement in the squareness ratio cannot be desired. On the other hand, it is possible to sufficiently remove the above-described hetero-phase and to increase the crystal grain size forming the main phase by performing the quality improvement treatment at the temperature 10°C or more higher than the retention temperature during the solution heat treatment.

The retention temperature during the quality improvement treatment is preferably, for example, 1180°C or more and 1210°C or less. When the retention temperature is less than 1180°C and exceeds 1210°C, the squareness ratio sometimes decreases. Further, when the heat treatment time is less than 2 hours, diffusion is insufficient, the hetero-phase is not sufficiently removed, and the effect of improving the squareness ratio is small. Further, when the heat treatment time exceeds 12 hours, the element R such as Sm evaporates, to cause a risk that good magnetic properties cannot be obtained. Incidentally, the heat treatment time in the quality improvement treatment is more preferably 4 hours or more and 10 hours or less, and further preferably 6 hours or more and 8 hours or less. Further, the quality improvement treatment is preferably performed in the vacuum or the inert atmosphere such as the argon gas in order to prevent oxidation.

Next, the aging treatment is performed for the sintered compact after the rapid cooling. The aging treatment is a treatment to increase the coercive force of the magnet by controlling the metallic structure, and has a purpose that the metallic structure of the magnet is phase-separated into a plurality of phases.

In a general Sm-Co based magnet, it is said that the M-rich platelet phase precipitates, and thereafter, the $TbCu_7$ crystal phase is phase-separated into the plurality of phases such as the $Th_2Zn_{17}$ crystal phase, the Cu-rich phase, and so on. In this case, it is said that the M-rich platelet phase functions as an element diffusion path at a grain boundary plane with the $TbCu_7$ crystal phase, and it is an effective phase to obtain the coercive force. However, there is a risk that the precipitation of the M-rich platelet phase does not lattice-match with the $Th_2Zn_{17}$ crystal phase. When there is a lattice-mismatch part, a magnetization reversal nucleus is easy to be formed, to cause a risk of decrease in the coercive force and deterioration in the squareness ratio. On the other hand, if a phase to relax strain between the M-rich platelet phase and the $Th_2Zn_{17}$ crystal phase (relaxing phase) can be generated, there is a high possibility to improve the coercive force and the squareness ratio. However, it is necessary to generate the Cu-rich phase prior to the M-rich platelet phase to generate the relaxing phase.

In the arrangement, after the solution heat treatment, the aging treatment is separated into a preliminary aging treatment and a main aging treatment, and the retention temperature and time, and a slow cooling rate after the retention are strictly controlled in the preliminary aging treatment.

In the preliminary aging treatment, the retention at a higher temperature than a conventional treatment is performed to accelerate nucleation of the Cu-rich phase or the like. In the preliminary aging treatment, the retention is performed at a temperature of 800°C or more and 850°C or less for 1 hour or more and 4 hours or less. When the retention temperature is higher than 850°C, the cell structure cannot be obtained, and the squareness ratio is easy to decrease. The gap between the M-rich platelet phases becomes wider as the retention temperature becomes higher. Besides, when the retention temperature is less than 800°C, the cell structure becomes dense resulting in that the cell phase with sufficient size cannot be obtained, and it becomes difficult to increase the recoil magnetic permeability. The retention temperature in the preliminary aging treatment is more preferably, for example, 820°C or more and 840°C or less. When the retention time is less than 1 hour, the cell structure becomes insufficient, and the coercive force is difficult to be exerted. Besides, when the retention time is longer than 4 hours, the cell wall phase becomes excessively thick, and there is a possibility that the squareness ratio deteriorates.

After that, the main aging treatment is performed at a temperature higher than the conventional treatment, and thereby, the phase separation can be accelerated. In the main aging treatment, the temperature is heated up to 860°C or more and 900°C or less at a temperature increasing rate of 10°C/min or more and 15°C/min or less, and retention is performed at the reached temperature for 15 hours or more and 60 hours or less (first retention). Next, a slow cooling is performed to the temperature of 350°C or more and 650°C or less at a cooling rate of 0.2°C/min or more and 0.8°C/min or less, then the retention is performed at the reached temperature for 0.5 hours or more and 8 hours or less (second retention) to thereby perform the heat treatment. After that, cooling is performed down to room temperature. A sintered magnet can be thereby obtained.

When the temperature increasing rate is less than 10°C/min, a clear cell structure cannot be obtained, and the coercive force cannot be sufficiently obtained. When the temperature increasing rate is higher than 15°C/min, the nucleation of the cell wall phase increases, and the cell structure becomes dense. Accordingly, the size of the cell phase is insufficient, and the recoil magnetic permeability is difficult to be increased.

When the first retention temperature is less than 860°C, the cell structure becomes dense, and the cell phase with the sufficient size is difficult to be obtained. When the first retention temperature is higher than 900°C, the clear cell structure cannot be obtained, and the coercive force cannot be sufficiently obtained. The first retention temperature is more preferably, for example, 870°C or more and 890°C or less.

When the cooling rate during the slow cooling is less than 0.2°C/min, the cell wall phase becomes excessively thick, and the magnetization is easy to decrease. Besides, when the cooling rate exceeds 2.0°C/min, the difference in the Cu concentrations between the cell phase and the cell wall phase cannot be sufficiently obtained, and the coercive force is easy to decrease. The cooling rate during the slow cooling is more preferably, for example, 0.4°C/min or more and 1.5°C/min or less, and further preferably 0.5°C/min or more and 1.3°C/min or less. Besides, when the slow-cooling is performed to less than 350°C, a low-temperature hetero-phase as stated above is easy to be generated. Besides, when the slow-cooling is performed to the temperature over 650°C, the Cu concentration in the Cu-rich phase is not sufficiently increased, and there is a possibility that the sufficient coercive force cannot be obtained. Besides, when the retention time during the second retention exceeds 8 hours, the low-temperature hetero-phase is generated, and there is a possibility that the sufficient magnetic properties cannot be obtained.

(Second Arrangement)

The permanent magnet of the first arrangement can be used for rotary electrical machines such as various types of motors and power generators included in a vehicle or the like. Further, it is also possible to be used for stationary magnets and variable magnets of variable magnetic flux motors. The permanent magnet of the first arrangement is used to thereby constitute various rotary electrical machines. When the permanent magnet of the first arrangement is applied to the variable magnetic flux motor, an art disclosed in, for example, Japanese Patent Application Laid-open No. 2008-29148 or Japanese Patent Application Laid-open No. 2008-43172 can be applied to a configuration and a drive system of the variable magnetic flux motor.

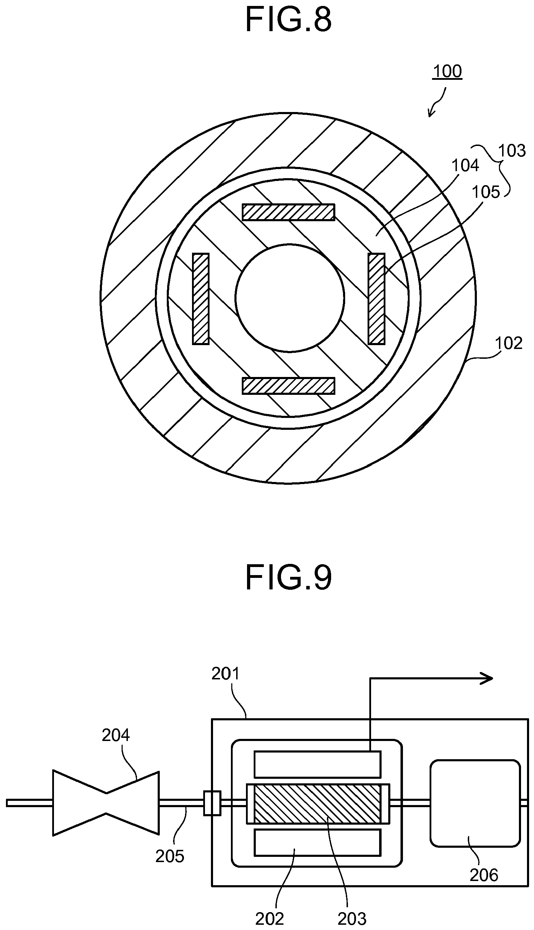

Next, there will be explained a motor including the above-described permanent magnet with reference to the drawings. Fig. 8 is a view illustrating a permanent magnet motor in this arrangement. In a permanent magnet motor 100 illustrated in Fig. 8, a rotor 103 is disposed in a stator 102. In an iron core 104 of the rotor 103, permanent magnets 105 are disposed. The magnetic flux density (magnetic flux amount) of the permanent magnet 105 is enabled to be variable. The permanent magnet 105 has a magnetization direction perpendicular to a Q-axis direction and hence is not affected by a Q-axis current, and can be magnetized by a D-axis current. The rotor 103 is provided with a magnetization winding (not illustrated). It has a structure that a current is passed from a magnetization circuit through this magnetization winding, and thereby, a magnetic field thereof directly operates on the permanent magnets 105.

The permanent magnet of the first arrangement can be used as the permanent magnet 105. It is thereby possible to suppress a decrease in output at the time of high-speed rotation even when performing variable speed driving from low-speed to high-speed. The motor including the permanent magnet of the first arrangement is suitable for, for example, a motor for a vehicle such as a hybrid vehicle and an electric vehicle where high output and reduction in size of the motor are demanded.

Fig. 9 illustrates a power generator. A power generator 201 illustrated in Fig. 9 includes stators 202 each using the permanent magnet. A rotor 203 disposed at an inner side of the stators 202 is connected to a turbine 204 provided at one end of the power generator 201 through a shaft 205. The turbine 204 is rotated by, for example, a fluid supplied from outside. Note that it is also possible to rotate the shaft 205 by transmitting dynamic rotation such as regenerative energy of a vehicle such as an automobile instead of the turbine 204 rotated by the fluid. Various publicly-known configurations can be applied for the stator 202 and the rotor 203.

The shaft 205 is in contact with a commutator (not-illustrated) disposed at an opposite side of the turbine 204 with respect to the rotor 203, and an electromotive force generated by the rotation of the rotor 203 is transmitted as an output of the power generator 201 through an isolated phase bus and a main transformer (not-illustrated) while being pressurized to a system voltage. The power generator 201 may be either a normal power generator or a variable magnetic flux generator. Note that electrostatic charge due to static electricity from the turbine 204 and a shaft current in accordance with power generation are generated at the rotor 203. Accordingly, the power generator 201 includes a brush 206 to discharge the electrostatic charge of the rotor 203. The power generator including the permanent magnet of the first arrangement is suitable for a power generator for a vehicle such as a hybrid vehicle and an electric vehicle where high output and reduction in size are demanded.

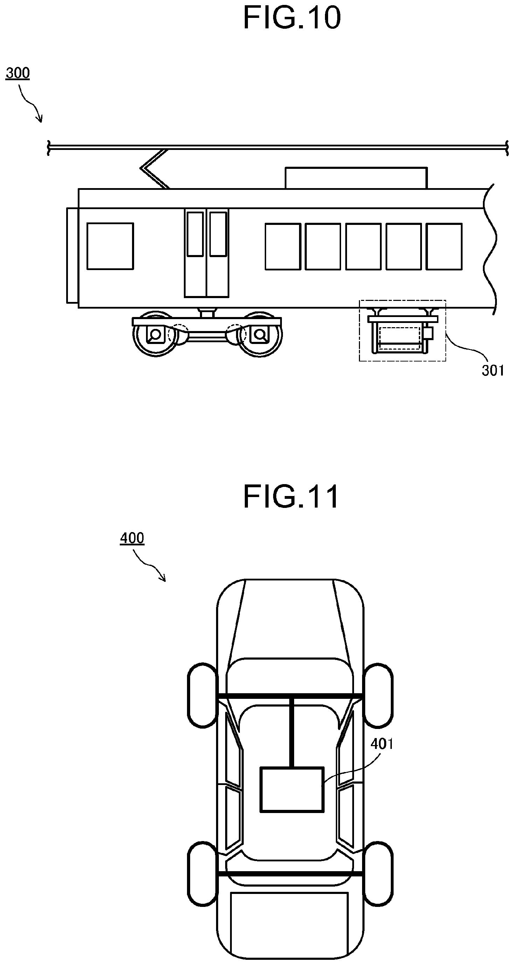

The above-described rotary electrical machine may be mounted on a railway vehicle (an example of the vehicle) used for railway traffic, for example. Fig. 10 is a view illustrating an example of a railway vehicle 300 which has a rotary electrical machine 301. Examples of the rotary electrical machine 301 include the motors of Fig. 8 and the power generator of Fig. 9. When the above-described rotary electrical machine is mounted as the rotary electrical machine 301, the rotary electrical machine 301 may be used as a motor which outputs drive force by using electric power supplied from a transmission line or electric power supplied from a secondary battery mounted on the railway vehicle 300, for example, or may be used as a generator which supplies electric power to various loads in the railway vehicle 300 by converting kinetic energy into electric power. Using the highly efficient rotary electrical machine such as a rotary electrical machine of the arrangement enables energy-saving running of the railway vehicle.

The above-described rotary electrical machine may be mounted on an automobile (another example of the vehicle) such as a hybrid vehicle or an electric vehicle. Fig. 11 is a view illustrating an example of an automobile 400 which has a rotary electrical machine 401. Examples of the rotary electrical machine 401 include the motors of Fig. 8 and the power generator of Fig. 9. When the above-described rotary electrical machine is mounted as the rotary electrical machine 401, the rotary electrical machine 401 may be used as a motor which outputs drive force of the automobile 400 or a generator which converts kinetic energy at the time of running of the automobile 400 into electric power.

[EXAMPLE]

(Example 1, Example 2)

Respective raw materials used for the permanent magnet were weighed by predetermined ratios and mixed, and thereafter arc-melted in an Ar gas atmosphere to produce an alloy ingot. The above-described alloy ingot was heat-treated by retaining at 1170°C for 12 hours, and thereafter coarse grinding and pulverizing with a jet mill were performed for the alloy ingot, to thereby prepare an alloy powder as a raw material powder of a magnet. The obtained alloy powder was press-molded in a magnetic field to produce a compression-molded body.

Next, the compression-molded body of the alloy powder was disposed in a chamber of a sintering furnace, the chamber was made into vacuum of $9.0 \times 10^{-3}$ Pa and then heated up to 1170°C and retained at the reached temperature for 25 minutes. After that, Ar gas was introduced, the chamber was heated up to 1200°C in the Ar atmosphere and retained at the reached temperature for 6 hours to perform sintering. Next, slow cooling was performed down to 1160°C and retention was performed at the reached temperature for 12 hours to perform a solution heat treatment, and then cooling was performed down to room temperature. Incidentally, a cooling rate after the solution heat treatment was set to 160°C/min.

Next, as illustrated in Table 2, it was heated up to 820°C and retained at the reached temperature for 2 hours as the preliminary aging treatment. After that, it was heated up to 880°C at a rate of 10°C/min, and retained at the reached temperature for 45 hours as the main aging treatment. After that, it was slowly cooled down to 450°C at the cooling rate of 0.6°C/min and retained at the reached temperature for 5 hours. After that, it was furnace-cooled down to room temperature, to thereby obtain a magnet.

A composition analysis of the magnet was performed by the ICP method. Incidentally, the composition analysis by the ICP method was performed by the following procedure. First, a sample taken from the described measurement position was pulverized in a mortar, a certain amount of the pulverized sample was weighed and put into a quartz beaker. Moreover, a mixed acid (an acid containing a nitric acid and a hydrochloric acid) was put into the beaker, and the beaker was heated up to about 140°C on a hot plate, so as to completely melt the sample in the beaker. Moreover, after letting cool, the sample was moved to a PFA (polytetrafluoroethylene) volumetric flask to be quantitated, to thereby prepare a sample solution.

Components contained in the above-described sample solution were quantitated by a calibration curve method using an ICP emission spectrophotometer. As an ICP emission spectrophotometer, SPS4000 manufactured by SII Nano Technology was used. The compositions of the obtained magnets are as illustrated in Table 1. Besides, a diameter of the cell phase, a gap between the M-rich platelet phases, further coercive force HcJ, residual magnetization Br, and recoil magnetic permeability were measured. Results thereof are illustrated in Table 3. Note that as a measurement apparatus, HD2300 manufactured by Hitachi High-Technologies Corporation was used in each example and comparative example.

(Example 3, Example 4, Example 5)

Respective raw materials were weighed by predetermined ratios and mixed, and thereafter high-frequency melted in the Ar gas atmosphere to produce an alloy ingot. The alloy ingot was coarsely ground and then heat-treated at 1180°C for 10 hours, and cooled down to room temperature by the rapid cooling. Moreover, coarse grinding and pulverizing with the jet mill were performed, to thereby prepare an alloy powder as a raw material powder of a magnet. Further, the above-described alloy powder was press-molded in the magnetic field to produce a compression-molded body.

Next, the compression-molded body of the alloy powder was disposed in the chamber of the sintering furnace, the chamber was made into vacuum of $9.0 \times 10^{-3}$ Pa and then heated up to 1170°C and retained at the reached temperature for 30 minutes, and thereafter the Ar gas was introduced into the chamber. The temperature in the chamber was heated up to 1195°C in the Ar atmosphere and retention was performed at the reached temperature for 6 hours to perform the sintering. Next, the slow cooling was performed down to 1140°C and the retention was performed at the reached temperature for 16 hours, to perform the solution heat treatment, and then the cooling was performed down to room temperature. Incidentally, the cooling rate after the solution heat treatment was set to 150°C/min.

Next, as illustrated in Table 2, it was heated up to 840°C and retained at the reached temperature for 3 hours as the preliminary aging treatment. After that, it was heated up to 890°C at the rate of 12°C/min, and retained at the reached temperature for 40 hours as the main aging treatment. After that, it was slowly cooled down to 400°C at the cooling rate of 0.5°C/min and retained at the reached temperature for 2 hours. After that, it was furnace-cooled down to room temperature, to thereby obtain a magnet.

Moreover, components contained in the sample solution were quantitated by the calibration curve method using the above-described ICP emission spectrophotometer. The compositions of the obtained magnets are as illustrated in Table 1. Further, the diameter of the cell phase, the gap between the M-rich platelet phases, further the coercive force HcJ, the residual magnetization Br, and the recoil magnetic permeability were measured. Results thereof are illustrated in Table 3.

(Example 6, Example 7)

Respective raw materials were weighed by predetermined ratios and mixed, and thereafter high-frequency melted in the Ar gas atmosphere to produce an alloy ingot. The alloy ingot was coarsely ground and then heat-treated at 1175°C for 12 hours, and cooled down to room temperature by the rapid cooling. Moreover, the coarse grinding and the pulverizing with the jet mill were performed, to thereby prepare an alloy powder as a raw material powder of a magnet. Further, the above-described alloy powder was press-molded in the magnetic field to produce a compression-molded body.

Next, the compression-molded body of the alloy powder was disposed in the chamber of the sintering furnace, the chamber was made into vacuum of $8.0 \times 10^{-3}$ Pa and then heated up to 1160°C and retained at the reached temperature for 15 minutes, and thereafter the Ar gas was introduced into the chamber. The temperature in the chamber was heated up to 1185°C in the Ar atmosphere and retention was performed at the reached temperature for 4 hours to perform the sintering. Next, the slow cooling was performed down to 1130°C and the retention was performed at the reached temperature for 12 hours, to perform the solution heat treatment, and then the cooling was performed down to room temperature. Incidentally, the cooling rate after the solution heat treatment was set to 200°C/min.

Next, as illustrated in Table 2, it was heated up to 850°C and retained at the reached temperature for 2 hours as the preliminary aging treatment. After that, it was heated up to 895°C at the rate of 14°C/min, and retained at the reached temperature for 50 hours as the main aging treatment. After that, it was slowly cooled down to 420°C at the cooling rate of 0.4°C/min and retained at the reached temperature for 1 hour. After that, it was furnace-cooled down to room temperature, to thereby obtain a magnet.

As same as other examples, the compositions of the above-described respective magnets were checked by the ICP method. The compositions of the obtained magnets are as illustrated in Table 1. Further, the diameter of the cell phase, the gap between the M-rich platelet phases, further the coercive force HcJ, the residual magnetization Br, and the recoil magnetic permeability were measured. Results thereof are illustrated in Table 3.

(Example 8)

Respective raw materials were weighed by predetermined ratios and mixed, and thereafter high-frequency melted in the Ar gas atmosphere to produce an alloy ingot. The above-described alloy ingot was coarsely ground and then heat-treated at 1165°C for 8 hours, and cooled down to room temperature by the rapid cooling. Moreover, the coarse grinding and the pulverizing with the jet mill were performed, to thereby prepare an alloy powder as a raw material powder of a magnet. Further, the above-described alloy powder was press-molded in the magnetic field to produce a compression-molded body.

Next, the compression-molded body of the alloy powder was disposed in the chamber of the sintering furnace, the chamber was made into vacuum of $9.0 \times 10^{-3}$ Pa and then heated up to 1160°C and retained at the reached temperature for 30 minutes, and thereafter the Ar gas was introduced into the chamber. The temperature in the chamber was heated up to 1195°C in the Ar atmosphere and the retention was performed at the reached temperature for 4 hours to perform the sintering. Next, the slow cooling was performed down to 1130°C and the retention was performed at the reached temperature for 12 hours, to perform the solution heat treatment, and then the cooling was performed down to room temperature. Incidentally, the cooling rate after the solution heat treatment was set to 170°C/min.

Next, as illustrated in Table 2, it was heated up to 830°C and retained at the reached temperature for 2 hours as the preliminary aging treatment. After that, it was heated up to 880°C at the rate of 10°C/min, and retained at the reached temperature for 40 hours as the main aging treatment. After that, it was slowly cooled down to 400°C at the cooling rate of 0.5°C/min and retained at the reached temperature for 1 hour. After that, it was furnace-cooled down to room temperature, to thereby obtain a magnet.

As same as other examples, the compositions of the above-described respective magnets were checked by the ICP method. The compositions of the obtained magnets are as illustrated in Table 1. Further, the diameter of the cell phase, the gap between the M-rich platelet phases, further the coercive force HcJ, the residual magnetization Br, and the recoil magnetic permeability were measured. Results thereof are illustrated in Table 3.

(Example 9 to Example 12)

An alloy powder having the same composition as the example 8 was used as a raw material and press-molded in the magnetic field to thereby produce a compression-molded body. Next, the compression-molded body of the alloy powder was disposed in the chamber of the sintering furnace, the chamber was made into vacuum of 9.0 x 10$^{-3}$ Pa and then heated up to 1160°C and then retained at the reached temperature for 30 minutes, and thereafter the Ar gas was introduced into the chamber. Next, the temperature in the chamber was heated up to 1195°C in the Ar atmosphere and the retention was performed at the reached temperature for 4 hours to perform the sintering.

Next, the slow cooling was performed down to 1130°C and the retention was performed at the reached temperature for 12 hours, to perform the solution heat treatment, and then the cooling was performed down to room temperature. Incidentally, the cooling rate after the solution heat treatment was set to 170°C/min.

After that, the preliminary aging treatment, the main aging treatment, and so on were performed for the sintered compact after the solution heat treatment in each example at the preliminary aging retention temperature and the main aging retention temperature illustrated in Table 2 and the others are by following the method similar to the example 8, to thereby obtain a magnet.

As same as other examples, the compositions of the above-described respective magnets were checked by the ICP method. The compositions of the obtained magnets are as illustrated in Table 1. Further, the diameter of the cell phase, the gap between the M-rich platelet phases, further the coercive force HcJ, the residual magnetization Br, and the recoil magnetic permeability were measured as same as other examples. Results thereof are illustrated in Table 3.

(Comparative Example 1, Comparative Example 2)

Magnets each having the composition illustrated in Table 1 were produced by the same method as the example 1 and the example 2. As same as the examples, the diameter of the cell phase, the gap between the M-rich platelet phases, further the coercive force HcJ, the residual magnetization Br, and the recoil magnetic permeability were measured. Results thereof are illustrated in Table 3.

(Comparative Example 3 to Comparative Example 6)

An alloy powder having the same composition as the example 8 was used as a raw material and press-molded in the magnetic field to thereby produce a compression-molded body. Next, the compression-molded body of the alloy powder was disposed in the chamber of the sintering furnace, the chamber was made into vacuum of 9.0 x 10$^{-3}$ Pa and then heated up to 1160°C and retained at the reached temperature for 30 minutes, and thereafter the Ar gas was introduced into the chamber. Next, the temperature in the chamber was heated up to 1195°C in the Ar atmosphere and the retention was performed at the reached temperature for 4 hours to thereby perform the sintering.

After that, the solution heat treatment was performed under the same conditions as the example 8, and thereafter, the preliminary aging treatment, the main aging treatment, and so on were performed for the sintered compact after the solution heat treatment at the temperatures illustrated in Table 2 and the others are by following the conditions similar to the example 8, to thereby obtain a magnet.

As same as other examples, the compositions of the above-described respective magnets were checked by the ICP method. The compositions of the obtained magnets are as illustrated in Table 1. Further, the diameter of the cell phase, the gap between the M-rich platelet phases, further the coercive force HcJ, the residual magnetization Br, and the recoil magnetic permeability were measured as same as other examples. Results thereof are illustrated in Table 3.

As stated above, in each of the permanent magnets of the example 1 to the example 12, high recoil magnetic permeability, high coercive force, and high magnetization are exerted by controlling the diameter of the cell phase and the gap between the M-rich platelet phases at the main phase. It can be seen from the above that the permanent magnets of the example 1 to the example 12 are excellent in the magnetic properties. Besides, when the field weakening control method at the high-speed rotation is used for the rotary electrical machine such as the motor and the power generator included in the vehicles or the like, the current by the field weakening control method becomes unnecessary, and reduction in loss and improvement in efficiency become possible.

[Table 1]

| | Magnet composition (atomic ratio) | | | | | |
|---|---|---|---|---|---|---|
| | (Others) Example 1: Nd, Example 2: Ti, Example 3: Ni, Example 4: Cr, Example 5: Al+Cr, Comparative Example 1: Cr, Comparative Example 2: Ti) | | | | | |
| | Sm | Co | Fe | Cu | Zr | Other |
| Example 1 | 10.89 | 54.27 | 26.22 | 5.29 | 3.11 | 0.22 |
| Example 2 | 12.20 | 53.92 | 26.34 | 5.71 | 1.61 | 0.22 |
| Example 3 | 10.81 | 53.57 | 28.99 | 4.91 | 1.47 | 0.25 |
| Example 4 | 11.56 | 53.11 | 29.36 | 4.07 | 1.77 | 0.13 |
| Example 5 | 11.49 | 45.29 | 29.21 | 12.39 | 1.50 | 0.12 |
| Example 6 | 11.83 | 50.61 | 30.86 | 5.11 | 1.59 | 0.00 |
| Example 7 | 11.70 | 49.45 | 32.05 | 5.30 | 1.50 | 0.00 |
| Example 8 | 11.76 | 51.25 | 30.26 | 5.12 | 1.61 | 0.00 |
| Example 9 | 11.76 | 51.25 | 30.26 | 5.12 | 1.61 | 0.00 |
| Example 10 | 11.76 | 51.25 | 30.26 | 5.12 | 1.61 | 0.00 |
| Example 11 | 11.76 | 51.25 | 30.26 | 5.12 | 1.61 | 0.00 |
| Example 12 | 11.76 | 51.25 | 30.26 | 5.12 | 1.61 | 0.00 |
| Comparative Example 1 | 12.56 | 53.22 | 25.72 | 5.19 | 3.05 | 0.26 |
| Comparative Example 2 | 12.20 | 50.26 | 26.34 | 5.71 | 5.27 | 0.22 |
| Comparative Example 3 | 11.76 | 51.25 | 30.26 | 5.12 | 1.61 | 0.00 |
| Comparative Example 4 | 11.76 | 51.25 | 30.26 | 5.12 | 1.61 | 0.00 |
| Comparative Example 5 | 11.76 | 51.25 | 30.26 | 5.12 | 1.61 | 0.00 |
| Comparative Example 6 | 11.76 | 51.25 | 30.26 | 5.12 | 1.61 | 0.00 |

[Table 2]

| | Preliminary aging retention temperature (°C) | Main aging retention temperature (°C) |
|---|---|---|
| Example 1 | 820 | 880 |
| Example 2 | 820 | 880 |
| Example 3 | 840 | 890 |
| Example 4 | 840 | 890 |
| Example 5 | 840 | 890 |
| Example 6 | 850 | 895 |

(continued)

|  | Preliminary aging retention temperature (°C) | Main aging retention temperature (°C) |
|---|---|---|
| Example 7 | 850 | 895 |
| Example 8 | 830 | 880 |
| Example 9 | 810 | 880 |
| Example 10 | 845 | 880 |
| Example 11 | 830 | 855 |
| Example 12 | 830 | 895 |
| Comparative Example 1 | 820 | 880 |
| Comparative Example 2 | 820 | 880 |
| Comparative Example 3 | 760 | 880 |
| Comparative Example 4 | 865 | 880 |
| Comparative Example 5 | 830 | 840 |
| Comparative Example 6 | 830 | 950 |

[Table 3]

|  | Diameter of cell phase | Gap between M-rich platelet phases | Coercive force Hcj (kA/m) | Residual magnetization Br (T) | Recoil magnetic permeability |
|---|---|---|---|---|---|
| Example 1 | 220 | 65 | 1850 | 1.195 | 1.34 |
| Example 2 | 250 | 60 | 1840 | 1.195 | 1.28 |
| Example 3 | 265 | 65 | 1760 | 1.215 | 1.44 |
| Example 4 | 280 | 55 | 1840 | 1.22 | 1.51 |
| Example 5 | 260 | 60 | 1710 | 1.215 | 1.47 |
| Example 6 | 320 | 65 | 1650 | 1.235 | 1.56 |
| Example 7 | 350 | 70 | 1600 | 1.245 | 1.51 |
| Example 8 | 295 | 55 | 1680 | 1.235 | 1.37 |
| Example 9 | 265 | 45 | 1650 | 1.235 | 1.28 |
| Example 10 | 310 | 70 | 1750 | 1.235 | 1.5 |
| Example 11 | 280 | 50 | 1610 | 1.235 | 1.32 |
| Example 12 | 315 | 75 | 1850 | 1.235 | 1.53 |
| Comparative Example 1 | - | 90 | 180 | 0.95 | - |
| Comparative Example 2 | 160 | 55 | 1400 | 1.16 | 1.04 |
| Comparative Example 3 | 165 | 35 | 1280 | 1.225 | 1.03 |
| Comparative Example 4 | 500 | 100 | 580 | 1.09 | - |
| Comparative Example 5 | 155 | 50 | 1600 | 1.23 | 1.05 |

(continued)

|  | Diameter of cell phase | Gap between M-rich platelet phases | Coercive force Hcj (kA/m) | Residual magnetization Br (T) | Recoil magnetic permeability |
|---|---|---|---|---|---|
| Comparative Example 6 | - | 110 | 190 | 0.85 | - |

While certain arrangements have been described, these arrangements have been presented by way of example only, and are not intended to limit the scope of the claims. Indeed, the magnet described herein may be embodied in a variety of other forms; furthermore, various omissions, substitutions and changes in the form of the magnet described herein may be made.

(Numbered clauses relating to the arrangements)

1. A permanent magnet expressed by a composition formula:

$$R_pFe_qM_rCu_tCo_{100-p-q-r-t}$$

where R represents at least one element selected from the group consisting of rare earth elements, M represents at least one element selected from the group consisting of Zr, Ti, and Hf, p represents a number satisfying $10.5 \leq p \leq 12.4$ atomic percent, q represents a number satisfying $26 \leq q \leq 40$ atomic percent, r represents a number satisfying $0.88 \leq r \leq 4.3$ atomic percent, and t represents a number satisfying $3.5 \leq t \leq 13.5$ atomic percent, the magnet comprising:

a metal structure including a main phase having a $Th_2Zn_{17}$ crystal phase and a grain boundary phase provided between crystal grains of the main phase,

wherein the main phase includes a cell phase having the $Th_2Zn_{17}$ crystal phase, a Cu-rich phase having a Cu concentration higher than the cell phase, and a plurality of M-rich platelet phases extending in a direction intersecting with a c-axis of the $Th_2Zn_{17}$ crystal phase in a section including the c-axis and having a M element concentration higher than the cell phase, and

wherein, in the section, the cell phase has a 200 nm diameter or more, and a gap between the M-rich platelet phases is 80 nm or less.

2. The permanent magnet according to clause 1,

wherein the Cu concentration of the Cu-rich phase is 1.5 times or more and 15 times or less of the Cu concentration of the $Th_2Zn_{17}$ crystal phase, and

wherein the element M concentration of the M-rich platelet phase is 1.2 times or more and 5 times or less of the element M concentration of the $Th_2Zn_{17}$ crystal phase.

3. The permanent magnet according to clause 2,

wherein the Cu concentration of the Cu-rich phase is 35 atomic% or more.

4. The permanent magnet according to any one of clauses 1 to 3,

wherein an Fe concentration of the cell phase is 26 atomic% or more.

5. The permanent magnet according to any one of clauses 1 to 4,

wherein 50 atomic percent or more of the element R in the composition formula is Sm, and

wherein 50 atomic percent or more of the element M in the composition formula is Zr.

6. The permanent magnet according to any one of clauses 1 to 5,

wherein 20 atomic percent or less of Co in the composition formula is replaced with at least one element selected from the group consisting of Ni, V, Cr, Mn, Al, Ga, Nb, Ta, and W.

7. A rotary electrical machine comprising the permanent magnet according to any one of clauses 1 to 6.

8. The rotary electrical machine according to clause 7,

wherein the machine is a motor or a generator.

9. The rotary electrical machine according to clause 7, comprising:

a stator; and
a rotor,
wherein the stator or the rotor has the permanent magnet.

10. A vehicle comprising the rotary electrical machine according to any one of clauses 7 to 9.

11. The vehicle according to clause 10,
wherein rotation is transmitted to a shaft provided at one end of the rotary electrical machine.

**Claims**

1. A permanent magnet expressed by a composition formula:

$$R_pFe_qM_rCu_tCo_{100-p-q-r-t}$$

where R represents at least one element selected from the group consisting of rare earth elements, M represents at least one element selected from the group consisting of Zr, Ti, and Hf, p represents a number satisfying $10.5 \leq p \leq 12.4$ atomic percent, q represents a number satisfying $26 \leq q \leq 40$ atomic percent, r represents a number satisfying $0.88 \leq r \leq 4.3$ atomic percent, and t represents a number satisfying $3.5 \leq t \leq 13.5$ atomic percent,
the magnet comprising:

a metal structure including a main phase having a $Th_2Zn_{17}$ crystal phase and a grain boundary phase (12) provided between crystal grains (11) of the main phase,
wherein the main phase includes a cell phase (4) having the $Th_2Zn_{17}$ crystal phase, a Cu-rich phase (5) having a Cu concentration higher than the cell phase, and a plurality of M-rich platelet phases (6) extending in a direction intersecting with a c-axis of the $Th_2Zn_{17}$ crystal phase in a section including the c-axis and having a M element concentration higher than the cell phase, and
wherein, in the section, the cell phase has a 200 nm diameter or more, and a gap between the M-rich platelet phases is 80 nm or less.

2. The permanent magnet according to claim 1,
wherein the Cu concentration of the Cu-rich phase is 1.5 times or more and 15 times or less of the Cu concentration of the $Th_2Zn_{17}$ crystal phase, and
wherein the element M concentration of the M-rich platelet phase is 1.2 times or more and 5 times or less of the element M concentration of the $Th_2Zn_{17}$ crystal phase.

3. The permanent magnet according to claim 2,
wherein the Cu concentration of the Cu-rich phase is 35 atomic% or more.

4. The permanent magnet according to any one of claims 1 to 3,
wherein an Fe concentration of the cell phase is 26 atomic% or more.

5. The permanent magnet according to any one of claims 1 to 4,
wherein 50 atomic percent or more of the element R in the composition formula is Sm, and
wherein 50 atomic percent or more of the element M in the composition formula is Zr.

6. The permanent magnet according to any one of claims 1 to 5,
wherein 20 atomic percent or less of Co in the composition formula is replaced with at least one element selected from the group consisting of Ni, V, Cr, Mn, Al, Ga, Nb, Ta, and W.

7. A rotary electrical machine comprising the permanent magnet according to any one of claims 1 to 6.

8. The rotary electrical machine according to claim 7,
wherein the machine is a motor or a generator.

9. The rotary electrical machine according to claim 7, comprising:

a stator; and
a rotor,
wherein the stator or the rotor has the permanent magnet.

10. A vehicle comprising the rotary electrical machine according to any one of claims 7 to 9.

**11.** The vehicle according to claim 10,
wherein rotation is transmitted to a shaft provided at one end of the rotary electrical machine.

# FIG.1

# FIG.2

# FIG.3

# FIG.4

# FIG.5

# FIG.6

# FIG.7

# FIG.8

# FIG.9

# FIG.10

# FIG.11

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/156031 A1 (TOSHIBA KK [JP]) 2 October 2014 (2014-10-02) | 1,2,4-11 | INV. H01F1/055 |
| Y | * paragraphs [0013], [0015], [0019], [0025], [0026], [0040] - [0042]; figure 1; example 1; table 1 * | 3 | |
| X | US 2015/228385 A1 (HORIUCHI YOSUKE [JP] ET AL) 13 August 2015 (2015-08-13) | 1,2,4-11 | |
| Y | * paragraphs [0021], [0023] - [0025], [0034], [0037], [0074], [0075]; figure 1; example 4; table 1 * | 3 | |
| A | C. MAURY ET AL: "Genesis of the cell microstructure in the Sm(Co, Fe, Cu, Zr) permanent magnets with 2:17 type", PHYSICA STATUS SOLIDI (A), vol. 140, no. 1, 16 November 1993 (1993-11-16), pages 57-72, XP055108686, ISSN: 0031-8965, DOI: 10.1002/pssa.2211400104 * abstract * | 1-11 | |

TECHNICAL FIELDS
SEARCHED      (IPC)

H01F

The present search report has been drawn up for all claims

| Place of search | Date of completion of the search | Examiner |
|---|---|---|
| Munich | 14 September 2017 | Primus, Jean-Louis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 239 994 A1**

## ANNEX TO THE EUROPEAN SEARCH REPORT
## ON EUROPEAN PATENT APPLICATION NO.

EP 17 15 7588

This annex lists the patent family members relating to the patent documents cited in the above-mentioned European search report.
The members are as contained in the European Patent Office EDP file on
The European Patent Office is in no way liable for these particulars which are merely given for the purpose of information.

14-09-2017

| Patent document cited in search report | | | Publication date | Patent family member(s) | | | Publication date |
|---|---|---|---|---|---|---|---|
| WO 2014156031 | A1 | | 02-10-2014 | CN | 104685581 | A | 03-06-2015 |
| | | | | EP | 2979279 | A1 | 03-02-2016 |
| | | | | JP | 6091957 | B2 | 08-03-2017 |
| | | | | JP | 2014192253 | A | 06-10-2014 |
| | | | | US | 2015147228 | A1 | 28-05-2015 |
| | | | | WO | 2014156031 | A1 | 02-10-2014 |
| US 2015228385 | A1 | | 13-08-2015 | CN | 104641429 | A | 20-05-2015 |
| | | | | EP | 3046119 | A1 | 20-07-2016 |
| | | | | JP | 6017673 | B2 | 02-11-2016 |
| | | | | JP | WO2015037041 | A1 | 02-03-2017 |
| | | | | US | 2015228385 | A1 | 13-08-2015 |
| | | | | WO | 2015037041 | A1 | 19-03-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012175738 A
- JP 2008029148 A
- JP 2008043172 A

**Non-patent literature cited in the description**

- *IEEJ Transactions Industry Applications,* 2013, vol. 133 (9), 943-951